(19)

Europäisches
Patentamt
European
Patent Office
Office européen
des brevets

(11) **EP 1 745 846 A2**

(12) **EUROPEAN PATENT APPLICATION**

(43) Date of publication:
**24.01.2007 Bulletin 2007/04**

(21) Application number: **06014915.0**

(22) Date of filing: **18.07.2006**

(51) Int Cl.:
*B01J 23/38* (2006.01)   *B01J 23/52* (2006.01)
*B01J 37/02* (2006.01)   *B01J 37/34* (2006.01)
*B01J 19/00* (2006.01)   *B01D 53/86* (2006.01)

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **20.07.2005 JP 2005210397**

(71) Applicant: **Fuji Photo Film Co., Ltd.
Minami-Ashigara-shi, Kanagawa (JP)**

(72) Inventors:
• **Kunita, Kazuto, c/o Fuji Photo Film Co., Ltd.
Haibara-gun, Shizuoka (JP)**
• **Tomita, Tadabumi, c/o Fuji Photo Film Co., Ltd.
Haibara-gun, Shizuoka (JP)**

(74) Representative: **HOFFMANN EITLE
Patent- und Rechtsanwälte
Arabellastrasse 4
81925 München (DE)**

(54) **Metal catalyst, process for its production and microreactor employing said catalyst**

(57)     A metal particle type reaction catalyst comprising: a metallic member having micropores; and a metal having catalytic activity, wherein the micropores are filled with the metal having catalytic activity, and a catalytic-reaction apparatus comprising: a microreactor; and the metal particle type reaction catalyst disposed in the microreactor.

## FIG. 1

**Description**

Background of the Invention

1. Field of the Invention

The present invention relates to a metal particle type reaction catalyst comprising a metallic member in which micropores are present and a metal which has catalytic activity and with which the micropores are filled. The invention further relates to a process for producing the catalyst and an organic-synthesis reactor employing the catalyst.

2. Description of the Related Art,

In the technical region of metals and semiconductors in the form of thin films, thin lines, dots, or the like, it is known that electrically, optically, and chemically peculiar phenomena are observed due to the confinement of free electrons in sizes smaller than a characteristic length. Such phenomena are called "quantum mechanics size effect (quantum size effect)". At present, functional materials to which such a peculiar phenomenon is applied are being investigated and developed enthusiastically. For example, materials having a structure finer than several hundred nanometers are referred to as "microstructure materials" or "nanostructure materials" and are thought to be one kind of functional materials to be developed.

Examples of methods for producing such a microstructure material include methods in which a nanostructure material is directly produced by semiconductor processing techniques including techniques for fine-pattern formation such as photolithography, electron beam exposure, and X-ray exposure.

Among these, investigations on processes for producing a nanostructure material having a regular microstructure are attracting attention. Many such investigations are being made.

Examples of methods in which a regular structure is formed in a self-controlling manner include a method in which aluminum is anodized in an electrolytic solution to obtain an anodized alumina film (anodized coating). An anodized coating is known to have fine pores (micropores) regularly formed therein which have a diameter of from about several nanometers to about several hundred nanometers. It is known that when this self-ordering in an anodized coating is used to obtain a completely regular arrangement, the micropores theoretically are ones in which each micropore serves as a center of a hexangular-prism cell having a bottom face of regular hexagon and the lines which connect adjacent micropores form an equilateral triangle.

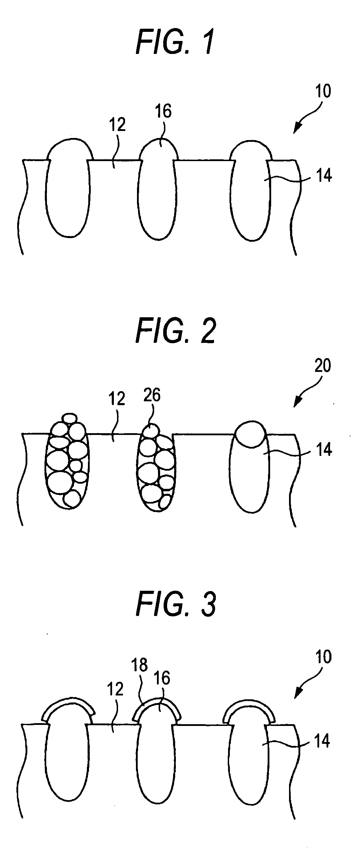

For example, H. Masuda et al., Jpn. J. Appl. Phys., Vol. 37(1998), pp. L1340-1342, Part 2, No. 11A, 1 November 1998 (Fig. 2) describes an anodized coating having micropores. In Hyômen Gijutsu Binran, The Surface Finishing Society of Japan (1998), The Nikkan Kogyo Shinbun Ltd., pp. 490-553, there is a description to the effect that pores are naturally formed in an anodized coating with the progress of oxidation. Furthermore, it is proposed in Hideki MASUDA, "Highly Regular Metal Nanohole Array Based on Anodized Alumina", Kotai Butsuri, 1996, Vol. 31, No. 5, pp. 493-499 to use a porous anodized coating as a mask to form a gold dot array on a silicon substrate.

The most characteristic feature of an anodized coating as a material is considered to reside in that the coating has a honeycomb structure in which micropores have been formed at almost equal spaces and the micropores extend parallel with one another in a direction almost perpendicular to the substrate surface. In addition, that the pore diameter, pore spacing, and pore depth can be relatively freely regulated is regarded as another feature not possessed by other materials (see Hideki MASUDA, "Highly Regular Metal Nanohole Array Based on Anodized Alumina", Kotai Butsuri, 1996, Vol. 31, No. 5, pp. 493-499).

Known examples of applications of an anodized coating include various devices such as nanodevices, magnetic devices, and luminescent materials. For example, JP-A-2000-31462 describes application examples in which cobalt or nickel is packed as a magnetic metal in micropores to constitute a magnetic device, ZnO as a luminescent material is packed in micropores, and an enzyme/antibody is packed in micropores to constitute a biosensor.

Furthermore, in the field of biosensing, JP-A-2003-268592 describes an example in which a structure including an anodized coating having micropores filled with a metal is used as a sample holder for Raman spectroscopy.

Raman scattering is the scattering which occurs upon an energy change when incident light (photons) strikes on a particle and scatters while undergoing an inelastic collision with the particle. The light emitted by Raman scattering is used in a technique of spectroanalysis. However, to increase the intensity of the scattered light to be used for examination is a subject for improving sensitivity and precision of the analysis.

A known phenomenon in which Raman scattered light is enhanced is a surface-enhanced resonance Raman scattering (SERRS) phenomenon. This is a phenomenon in which a certain kind of molecules absorbed on a surface of a metal electrode, sol, crystal, vapor-deposited film, semiconductor, etc. show enhanced scattering as compared to those in solutions. In particular, gold or silver is remarkably effective and enhances the scattering $10^{11}$- to $10^{14}$-fold. Although the mechanism by which the SERRS phenomenon occurs has not been elucidated so far, it is thought that surface plasmon resonance exerts an influence thereon. In JP-A-2003-268592 also, use of the principle of plasmon resonance as means for increasing the intensity of Raman scattering is described.

In the field of chemistry, on the other hand, fine particles of a metal or metal oxide for use as a catalyst for the oxidation or reduction reaction of organic compounds are made to have special catalytic activity by forming the particles as nanoparticles, as described in Masatake HARUTA "New Catalytic Function of Ultrafine Gold Particles", Gendai Kagaku, May 1998, pp. 42-49. It is not unusual in recent years that these catalysts are utilized in the chemical industry for plastic synthesis, etc. and in techniques for environmental preservation, such as the purification of automobile exhaust gas. For the control of catalytic activity, such nanoparticle catalysts are required to retain a stable nanoparticle structure which has a regular diameter and in which the particles are not fused to one another. At present, however, the mass production of such a nanoparticle catalyst usable industrially has a serious problem although the catalyst can be produced on a laboratory scale.

## Summary of the Invention

An object of the invention is to provide a metal particle type reaction catalyst which has a regular particle diameter and orientation and can be mass-produced and a process for producing the catalyst. Another object is to provide a reactor in which the efficiency of catalysis of the catalyst can be maximized.

The present inventor made intensive investigations on metal particle type reaction catalysts. As a result, it was found that a metal particle type reaction catalyst which has a regular particle diameter and orientation and can be mass-produced and a process for producing the catalyst can be provided by filling the micropores of a metallic member having micropores with a metal having catalytic activity. It was further found that by using the catalyst in amicroreactor, a conversion in the target reaction can be efficiently improved.

Furthermore, it was found that the surface of an anodized coating of aluminum or the like, in which regular micropores can be formed, is suitable for use as the metallic material having micropores. By forming nanoparticles of any of various metals having catalytic activity, such as gold, platinum, and silver, in the micropores, the target metal particle type reaction catalyst capable of mass production is obtained.

Moreover, a method effective for maximizing the efficiency of catalysis of the catalyst was found to be one in which the metal particle type reaction catalyst is disposed in a microreactor having a reaction space constituted of one or more channels on the mm to $\mu$m order. Thus, a conversion in the desired reaction can be greatly improved.

The invention provides the following (1) to (8).

(1) A metal particle type reaction catalyst comprising:

a metallic member having micropores; and
a metal having catalytic activity,

wherein the micropores are filled with the metal having catalytic activity.
(2) The metal particle type reaction catalyst as described in (1) above,
wherein the metallic member having micropores is an aluminum having an anodized coating on a surface of the aluminum.
(3) The metal particle type reaction catalyst as described in (1) or (2) above,
wherein the metal having catalytic activity is gold, platinum, palladium, ruthenium or silver.
(4) The metal particle type reaction catalyst as described in (2) or (3) above,
wherein the anodized coating has a thickness of from 0.1 to 1 $\mu$m and an average micropore diameter of from 0.01 to 0.5 $\mu$m.
(5) The metal particle type reaction catalyst as described in any of (2) to (4) above,
wherein the anodized coating has an average pore density of from 50 to 1,500 pores per $\mu$m$^2$.
(6) The metal particle type reaction catalyst as described in any of (2) to (5) above,
wherein a proportion of an area occupied by the micropores to an area of the surface of the aluminum is from 20 to 50%.
(7) A process for producing a metal particle type reaction catalyst, the process comprising:

subjecting a surface of a metallic member to an anodized treatment so as to form an anodized coating having micropores;
subj ecting a surface of the anodized coating to one surface treatment of a hydrophilizing treatment and a hydrophobizing treatment to impart a surface nature; and
filling the micropores with a metal having catalytic activity.

(8) A catalytic-reaction apparatus comprising:

a microreactor; and
a metal particle type reaction catalyst as described in any of (1) to (6) above disposed in the microreactor.

## Brief Description of the Drawings

Fig. 1 is a diagrammatic sectional view illustrating a surface of a structure of the invention which has undergone a pore-filling treatment by the electrodeposition method;
Fig. 2 is a diagrammatic sectional view illustrating a surface of a structure of the invention which has undergone a pore-filling treatment by a method using colloidal metal particles; and
Fig. 3 is a diagrammatic sectional view illustrating a surface of the structure of the invention shown in Fig. 1, the structure being used as a metal particle type reaction catalyst disposed in a microreactor,

wherein 10 and 20 denote structures, 12 denotes an anodized coating, 14 denotes a micropore, 16 and 26 denote metals and 18 denotes a reactant on a metal surface.

## Detailed Description of the Invention

The invention will be explained below in detail.

<Metallic Member in Which Micropores are Present>

Anymetallicmember havingmicropores in a surface thereof can be used, without particular limitations, as the metallic member in which micropores are present. However, from the standpoint of suitability for mass production, examples of the metallic member include valve metals, such as aluminum, tantalum, niobium, titanium, hafnium, zirconium, zinc, tungsten, bismuth, and antimony, which have an anodized coating on a surface thereof. Preferred of these is aluminum having an anodized coating on a surface thereof, because of the ease of control of micropore diameter.

<Example of the Metallic Member in Which Micropores are Present>

Although an explanation is given below on the case where aluminum is used as an example, the same applies to other metals.
The aluminummember having an anodizedcoating on a surface thereof, which may be used in the invention, can be obtained by anodizing a surface of a member having an aluminum surface.
The member having an aluminum surface is not particularly limited. Examples thereof include aluminum substrates such as a substrate obtained by vapor-depositing high-purity aluminum on low-purity aluminum (e.g., a recycled material); substrates obtained by coating a surface of a silicon wafer, quartz, glass, or the like with high-purity aluminum by a technique such as sputtering, vapor deposition, CVD, electrodeposition, chemical plating, or electroplating; and substrates having an aluminum foil laminated thereto.
The substrates having an aluminum foil laminated thereto are obtained by bonding an aluminum foil to a substrate, e.g., a resinous substrate, through an adhesive layer formed from an adhesive.
Examples of the adhesive to be used include aromatic polyether type one-pack moisture-curable adhesives (e.g., SF102RA, manufactured by Dainippon Ink & Chemicals, Inc.); aromatic polyether type two-pack curable adhesives (e.g., 2K-SF-302A/HA550B, manufactured by Dainippon Ink & Chemicals, Inc.); aliphatic polyester type two-pack curable adhesives (e.g., 2K-SF-250A/HA280B, manufactured by Dainippon Ink & Chemicals, Inc.); water-based adhesives for dry laminating (e.g., WS305A/LB-60, WS201A/LB-60, WS325A/LJ-55, WS350A/LA-100, and WS-320A, all manufactured by Dainippon Ink & Chemicals, Inc.); organic-solvent-based adhesives for dry laminating (e.g., LX-747A/KX-75, LX-88H (T)/KW-75, and LX-732/KRX-90, all manufactured by Dainippon Ink & Chemicals, Inc.); one-pack type thermosetting epoxy adhesives (e.g., EP106, EP138, EP160, EP170, and EP171, all manufactured by Cemedine Co., Ltd.); one-pack type anaerobically curable adhesives such as acrylic oligomers (SGA) (e.g., Y-800 Series and Y-805GH, all manufactured by Cemedine Co., Ltd.); special silicone-modified polymer type one-pack elastic adhesives (e.g., Super X, manufactured by Cemedine Co., Ltd.); phenolic resin/polymer blend adhesives such as mixtures of a phenolic resin and a butadiene or acrylonitrile rubber, various mixtures of a phenolic resin and poly (vinyl acetate), poly (vinyl acetal), poly(vinyl butyral), or poly(vinyl formal), and mixtures of a phenolic resin and an epoxy; two-pack condensation reaction type adhesives; two-pack addition reaction type adhesives such as epoxies and isocyanates; two-pack radical polymerization type adhesives such as acrylic oligomers (SGA); hot-melt type adhesives such as polyimides, polyesters, and polyolefins; pressure-sensitive adhesives such as rubbers and poly (acrylic ester)s; one-pack type cold-setting adhesives containing a 2-cyanoacrylic ester as the main component; methyl 2-cyanoacrylate adhesives; and ethyl 2-cyanoacrylate adhesives (e.g., Aron Alpha, manufactured by Toagosei Co., Ltd.) and α-cyanoacrylate adhesives (e.g., 3000DX Series, manufactured by Cemedine Co., Ltd.).

The thickness of the adhesive layer is preferably 3-50 μm, more preferably 5-20 μm, even more preferably 10-20 μm. The thickness of the adhesive layer can be determined, for example, by a method in which a section of the layer is examined with an SEM.

An aluminum foil is disposed on the adhesive layer. The thickness of the aluminum foil is preferably 1-10 μm, more preferably 1-5 μm, even more preferably 2-4 μm.

In the case where recesses serving as starting points in a main anodization treatment (anodization treatment for forming micropores) are to be formed by the self-ordering method as will described later, the member itself having an aluminum surface should have some degree of thickness. An aluminum substrate is hence preferred.

That surface of the aluminum member on which an anodized coating is to be formed by an anodization treatment has an aluminum purity of preferably 99.5% by mass or higher, more preferably 99.80% by mass or higher. The aluminum purity thereof is preferably lower than 99.99% by mass, more preferably 99.95% by mass or lower. Aluminum purities of 99.5% by mass and higher result in the sufficient regularity of pore arrangement, while aluminum purities lower than 99.99% by mass enable inexpensive production. (In this specification, mass ratio is equal to weight ratio.)

It is preferred that the surface of the aluminum member be subjected to a degreasing treatment and a mirror finish treatment beforehand.

<Degreasing Treatment>

The degreasing treatment is conducted for the purpose of dissolving and removing organic ingredients adherent to the aluminum surface, such as dust, fats, and resins, with an acid, alkali, organic solvent, etc. to thereby prevent such organic ingredients from causing defects in the treatments which will be described later.

For the degreasing treatment, known degreasing agents can be used. Specifically, the treatment can be conducted by using various commercial degreasing agents by a given method.

Especially preferred examples of methods for the treatment are as follows.

A method in which an organic solvent selected from various alcohols, various ketones, benzine, gasoline, and the like is brought into contact with the aluminum surface at ordinary temperature (organic solvent method); a method in which a liquid containing a surfactant such as a soap or neutral detergent is brought into contact with the aluminum surface at a temperature of from ordinary temperature to 80°C and the aluminum surface is then washed with water (surfactant method); a method in which an aqueous sulfuric acid solution having a concentration of 10-200 g/L is kept in contact with the aluminum surface for 30-80 seconds at a temperature of from ordinary temperature to 70°C and the surface is then washed with water; a method which comprises keeping an aqueous sodium hydroxide solution having a concentration of 5-20 g/L in contact with the aluminum surface at ordinary temperature for about 30 seconds, simultaneously causing a direct current to flow through the solution, with the aluminum surface used as a cathode, at a current density of 1-10 A/dm$^2$ to conduct electrolysis, and then bringing the aluminum surface into contact with an aqueous nitric acid solution having a concentration of 100-500 g/L to neutralize; a method which comprises keeping any of various known electrolytic solutions for anodization treatment in contact with the aluminum surface at ordinary temperature and, simultaneously therewith, causing a direct current or alternating current to flow through the solution, with the aluminum surface used as a cathode, at a current density of 1-10 A/dm$^2$ to conduct electrolysis; a method in which an aqueous alkali solution having a concentration of 10-200 g/L is kept in contact with the aluminum surface at 40-50°C for 15-60 seconds and the aluminum surface is then brought into contact with an aqueous nitric acid solution having a concentration of 100-500 g/L to neutralize; a method in which an emulsion prepared by mixing gas oil, kerosene, or the like with a surfactant, water, etc. is brought into contact with the aluminum surface at a temperature of from ordinary temperature to 50°C and the aluminum surface is then washed with water (emulsion degreasing method); and a method in which a liquid mixture comprising sodium carbonate, a phosphoric acid salt, and a surfactant is kept in contact with the aluminum surface at a temperature of from ordinary temperature to 50°C for 30-180 seconds and the aluminum surface is then washed with water (phosphoric acid salt method).

It is preferred that the degreasing treatment be conducted by a method which is capable of removing the fats present on the aluminum surface and, on the other hand, causes almost no aluminum dissolution. In this respect, the organic solvent method, surfactant method, emulsion degreasing method, and phosphoric acid salt method are preferred.

<Mirror Finish Treatment>

The mirror finish treatment is conducted for the purpose of eliminating the surface irregularities of the aluminum member to thereby improve evenness and reproducibility in the pore-filling treatment conducted by electrodeposition or the like which will be described later. Examples of the surface irregularities of the aluminum member include rolling streaks, i.e., streaks generated in rolling, when the aluminum member is one produced through rolling.

The mirror finish treatment in the invention is not particularly limited, and known methods can be used. Examples thereof include mechanical polishing, chemical polishing, and electrolytic polishing.

Examples of the mechanical polishing include a method in which the aluminum surface is polished with any of various commercial polishing cloths and a method in which any of various commercial abrasive materials (e.g., diamond and alumina) is used in combination with a buff. Specific preferred examples of the method employing abrasive materials include a method in which the abrasive material to be used is changed from coarse particles to fine particles with the lapse of time. In this case, the abrasive material to be finallyusedpreferably is one having a particle size of #1500. Thus, a gloss of 50% or higher (in the case of rolled aluminum, a gloss of 50% or high for each of the rolling direction and the transverse direction) can be imparted.

Examples of the chemical polishing include the various methods described in Aluminum Handbook, 6th edition, edited by Japan Aluminum Association, 2001, pp. 164-165.

Furthermore, preferred examples thereof include the phosphoric acid-nitric acid method, Alupol I, Alupol V, Alcoa R5, $H_3PO_4$-$CH_3COOH$-Cu method, and $H_3PO_4$-$HNO_3$-$CH_3COOH$ method. Preferred of these are the phosphoric acid-nitric acid method, $H_3PO_4$-$CH_3COOH$-Cu method, and $H_3PO_4$-$HNO_3$-$CH_3COOH$ method.

The chemical polishing can impart a gloss of 70% or higher (in the case of rolled aluminum, a gloss of 70% or higher can be imparted for each of the rolling direction and the transverse direction).

Examples of the electrolytic polishing include the various methods described in Aluminum Handbook, 6th edition, edited by Japan Aluminum Association, 2001, pp. 164-165.

Furthermore, preferred examples thereof include the method described in U.S. Patent 2,708,655.

The method described in Jitsumu Hyômen Gijutsu, Vol. 33, No. 3, 1986, pp. 32-38 is also preferred.

The electrolytic polishing can impart a gloss of 70% or higher (in the case of rolled aluminum, a gloss of 70% or higher can be imparted for each of the rolling direction and the transverse direction).

Those methods may be used in a suitable combination. Preferred examples thereof include a technique in which the method employing an abrasive material is conducted while changing the abrasive material from coarse particles to fine particles with the lapse of time and, thereafter, the aluminum surface is subjected to electrolytic polishing.

As a result of the mirror finish treatment, a surface having an average surface roughness Ra of 0.1 $\mu$m or lower and a gloss of 50% or higher can, for example, be obtained. The average surface roughness Ra thereof is preferably 0.03 $\mu$m or lower, more preferably 0.02 $\mu$m or lower. The gloss thereof is preferably 70% or higher, more preferably 80% or higher.

The gloss is expressed in terms of regular reflectance which is the reflectance as measured from a direction perpendicular to the rolling direction by the method as provided for in JIS Z8741-1997 "Method, 360-Degree Specular Gloss". Specifically, a variable-angle gloss meter (e.g., VG-1D, manufactured by Nippon Denshoku Kogyo K.K.) is used to measure the gloss at an incidence/reflection angle of 60 degrees when the regular reflectance is 70% or lower, or at an incidence/reflection angle of 20 degrees when the regular reflectance exceeds 70%.

<Formation of Recesses>

In the case where a surface of the member having an aluminum surface is anodized, it is preferred that recesses serving as starting points for micropore formation in the anodization treatment for forming micropores (hereinafter, sometimes referred to also as "main anodization treatment") be formed before the main anodization treatment.

Methods for forming the recesses are not particularly limited. Examples thereof include the self-ordering method in which the self-regularity of an anodized coating is utilized, physical methods, corpuscular ray method, block copolymer method, and resist interference exposure method.

<Self-Ordering Method>

The self-ordering method is a method in which the phenomenon in which micropores in an anodized coating are formed in a regular arrangement is utilized and factors which disturb the regular arrangement are removed to thereby improve regularity. Specifically, high-purity aluminum is used and an anodized coating is formed at a low rate over a prolonged period (e.g., from several hours to ten-odd hours) while applying a voltage according to the kind of the electrolytic solution. Thereafter, a coating removal treatment for dissolving and removing the anodized coating is conducted.

In this method, the pore diameter depends on the voltage. Consequently, a desired pore diameter can be obtained in some degree by regulating the voltage.

Known typical examples of the self-ordering method are described in J. Electrochem. Soc., Vol. 144, No. 5, May 1997, p. L128; Jpn, J. Appl. Phys., Vol. 35 (1996) Pt. 2, No. 1B, L126; Appl. Phys. Lett., Vol. 71, No. 19, 10 Nov. 1997, p. 2771; and H. Masuda et al., Jpn. J. Appl. Phys., Vol. 37(1998), pp. L1340-1342, Part 2, No. 11A, 1 November 1998 (Fig. 2) cited above. Specifically, the self-ordering method is being conducted under the following conditions.

0.3 mol/L sulfuric acid, 0°C, 27 V, 450 minutes (J. Electrochem. Soc., Vol. 144, No. 5, May 1997, p. L128)

0.3 mol/L sulfuric acid, 10°C, 25 V, 750 minutes (J. Electrochem. Soc., Vol. 144, No. 5, May 1997, p. L128)

0.3 mol/L oxalic acid, 17°C, 40 V, 600 minutes; and subsequent pore-widening treatment (liquid containing 6% by weight phosphoric acid and 1.8% by weight chromic acid, 60°C, 840 minutes) (Jpn, J. Appl. Phys., Vol. 35 (1996) Pt. 2, No. 1B, L126)

0.3 mol/L oxalic acid, 17°C, 40-60 V, 36 minutes; and subsequent pore-widening treatment (5% by weight phosphoric acid, 30°C, 70 minutes) (Appl. Phys. Lett., Vol. 71, No. 19, 10 Nov. 1997, p. 2771)

0.04 mol/L oxalic acid, 3°C, 80 V, coating thickness, 3 $\mu$m; and subsequent pore-widening treatment (5% by weight phosphoric acid, 30°C, 70 minutes) (Appl. Phys. Lett., Vol. 71, No. 19, 10 Nov. 1997, p. 2771)

0.3 mol/L phosphoric acid, 0°C, 195 V, 960 minutes; and subsequent pore-widening treatment (10% by weight phosphoric acid, 240 minutes) (H. Masuda et al., Jpn. J. Appl. Phys., Vol. 37(1998), pp. L1340-1342, Part 2, No. 11A, 1 November 1998 (Fig. 2)).

In the methods described in those documents, the coating removal treatment for dissolving and removing an anodized coating is conducted with an about 50°C aqueous solution of a chromic acid/phosphoric acid mixture and a time period of 12 hours or longer is used for this treatment. Incidentally, in case where a boiling aqueous solution is used for the treatment, the starting points for ordering are destroyed or disturbed. Consequently, the aqueous solution is used in an unboiled state.

In the self-ordered anodized coating, regularity becomes higher as the position approaches the aluminum part. Because of this, the coating removal is conducted so that a bottom part of the anodized coating remains on the aluminum part and is exposed. Thus, regular recesses are obtained. Consequently, in the coating removal treatment, the aluminum is not dissolved and the anodized coating only, which is aluminum oxide, is dissolved.

The self-ordering anodization treatment in the invention can be conducted, for example, by a method in which a voltage is applied in a solution having an acid concentration of 1-10% by mass, with the aluminum member used as an anode. For the solution for use in the anodization treatment, use can be made of sulfuric acid, phosphoric acid, chromic acid, oxalic acid, sulfamicacid, benzenesulfonicacid, amidesulfonic acids, and the like. Such acids may be used alone or in combination of two or more thereof.

Conditions for the self-ordering anodization treatment cannot be unconditionally determined because they vary depending on the electrolytic solution to be used. In general, however, appropriate conditions include an electrolytic solution concentration of 1-10% by mass, solution temperature of 0-20°C, current density of 0.1-10 A/dm$^2$, voltage of 10-200 V, and electrolysis time of 2-20 hours.

The thickness of the self-ordered anodized coating is preferably 10-50 $\mu$m.

In the invention, the time period of the self-ordering anodization treatment is preferably 1-16 hours, morepreferably 2-12 hours, even more preferably 2-7 hours.

The time period of the coating removal treatment is preferably 0.5-10 hours, more preferably 2-10 hours, even more preferably 4-10 hours.

When an anodized coating is formed by the self-ordering method in the manner described above and then dissolved and removed and the main anodization treatment which will be described later is subsequently conducted under the same conditions, then nearly straight micropores are formed almost perpendicularly to the coating surface.

An explanation is given below on the coating removal treatment to be used in the self-ordering method. Examples of the coating removal treatment include the chemical dissolution method and the reverse-electrolysis removal method.

(Chemical Dissolution Method)

A suitably selected aqueous solution of a chemical substance which dissolves the anodized coating but is low in the ability to dissolve aluminum metal can be used for the coating removal treatment while suitably regulating conditions for the immersion treatment. Examples of such chemical substances include oxidizing agents such as permanganic acid (salts), chromic acid and related compounds, nitric acid and related compounds, halogens, peroxides, peroxo acids, sulfuric acid and analogues thereof, oxoacids (salts), and perchloric acid salts and analogues thereof. These oxidizing agents, when used under suitably regulated immersion treatment conditions, form a corrosion-inhibitive coating upon contact with aluminum metal. Thus, the aluminum metal can be inhibited from corroding. Preferred of those oxidizing agents is chromic acid.

The range of the concentration of the chemical substance in the aqueous solution is preferably 8-40 g/L, more preferably 10-30 g/L, most preferably 15-25 g/L. The range of the temperature of the solution is preferably 30-98°C, more preferably 35-80°C, most preferably 40-60°C. The immersion time is preferably 1-24 hours, more preferably 3-18 hours, most preferably 7-14 hours. For accelerating the dissolution of the anodized coating, it is preferred to suitably add phosphoric acid. In this case, the range of the concentration of phosphoric acid is preferably 30-120 g/L, more preferably 40-90 g/L, most preferably 60-80 g/L.

(Reverse-Electrolysis Removal Method)

In place of the chemical dissolution method, a method may be used in which a sample is attached in an electrolytic solution to the cathode facing the anode used in the anodization and reverse electrolysis is conducted. As a result, hydrogen gas generates at the interface between the aluminum and the anodized coating and the coating is removed by the pressure of this gas. Thus, the coating can be removed while maintaining the regular arrangement of the starting points. The electrolytic solution is required to have improved electrical conductivity, this effect being obtained by adding ions to pure water. Although the electrolytic solution used for the anodization may be used, there are cases where the acid aqueous solution remaining after coating removal causes aluminum substrate dissolution to dissolve away the regularly arranged starting points. With respect to pH, a weakly acid aqueous solution is preferred.

Examples of preferred kinds of the electrolytic solution include aqueous solutions of aluminum salts, such as an aqueous solution of aluminum sulfate in the case where the anodized coating is one formed in an electrolytic bath containing sulfuric acid and an aqueous solution of aluminum oxalate in the case where the anodized coating is one formed in an electrolytic bath containing oxalic acid.

The range of the concentration thereof is preferably 0.5-20 g/L, more preferably 0.8-10 g/L, most preferably 1-5 g/L. The range of the pH thereof is preferably 5-1, more preferably 4.5-2, most preferably 4-3. The range of the electrical conductivity thereof is preferably 0.1-50 mS/cm, more preferably 0.5-40 mS/cm, most preferably 1-10 mS/cm. The range of the temperature thereof is preferably 2-40°C, more preferably 10-35°C, most preferably 15-33°C.

<Physical Methods>

Examples of the physical methods include a method using press patterning. Specific examples thereof include a method in which a plate having projections on a surface thereof is pressed against an aluminum surface to form recesses therein. For example, the method described in JP-A-10-121292 can be used.

Examples thereof further include a method which comprises closely arranging polystyrene spheres on an aluminum surface, vapor-depositing $SiO_2$ thereon, subsequently removing the polystyrene spheres, and etching the substrate using the vapor-deposited $SiO_2$ as a mask to thereby form recesses.

<Corpuscular Ray Method>

The corpuscular raymethod is a method in which an aluminum surface is irradiated with corpuscular rays to form recesses. The corpuscular ray method has an advantage that the positions of recesses can be regulated at will.

Examples of the corpuscular rays include charged-particle beams, focused ion beams (FIB), and electron beams.

As the corpuscular ray method may also be used, for example, the method described in JP-A-2001-105400.

<Block Copolymer Method>

The block copolymer method is a method which comprises forming a block copolymer layer on an aluminum surface, forming a sea-island structure in the block copolymer layer by heat annealing, and then removing the island parts to form recesses.

As the block copolymer method may be used, for example, the method described in JP-A-2003-129288.

<Resist Interference Exposure Method>

The resist interference exposure method is a method in which a resist is disposed on an aluminum surface and the resist is exposed to light and developed to thereby form, in the resist, recesses extending to the aluminum surface.

As the resist interference exposure method may be used, for example, the method described in JP-A-2000-315785.

Of the various methods for recess formation, the self-ordering method, FIB method, and resist interference exposure method are desirable because these methods can evenly form recesses throughout an area as large as about a 10-cm square or larger.

Furthermore, when production cost is taken into account, the self-ordering method is most preferred. The FIB method also is preferred from the standpoint that the arrangement of micropores can be regulated at will.

The recesses to be formed preferably have a depth of about 10 nm or larger. The width thereof preferably is not larger than the target pore diameter.

<Main Anodization Treatment>

After recesses are formed preferably in an aluminum surface in the manner described above, an anodized coating in which micropores are present is formed by the main anodization treatment.

In the invention, the surface of the anodized coating obtained has a surface nature which is either hydrophilicity or hydrophobicity. Methods for imparting the surface nature to the surface of the anodized coating are not particularly limited. Examples thereof include a method in which after an anodized coating is formed, the surface thereof is subjected to a surface treatment selected between a hydrophilizing treatment and a hydrophobizing treatment to thereby impart the surface nature; and a method in which an anodized coating is formed by conducting an anodization treatment using an electrolytic solution containing a treating agent which is either of a hydrophilizing agent and a hydrophobizing agent.

For the main anodization treatment, known methods for anodization treatment can be used.

In the case of using the method comprising forming an anodized coating and then subjecting it to a surface treatment, it is preferred to conduct the main anodization treatment under the same conditions as in the self-ordering method described above.

Also preferred are: a method in which direct-current on/off operations are repeatedly conducted intermittently, with the DC voltage kept constant; and a method in which direct-current on/off operations are repeatedly conducted while intermittently changing the DC voltage. These methods are preferred because an anodized coating having fine micropores is formed and, hence, the pore-filling treatment especially by electrodeposition attains improved evenness.

In the method in which the voltage is intermittently changed, it is preferred to gradually lower the voltage. This enables the resultant anodized coating to have reduced electrical resistance and the subsequent electrodeposition treatment to be conducted evenly.

When this main anodization treatment is conducted at a low temperature, micropores are formed which are regularly arranged and have an even pore diameter.

From the standpoint of ease of pore filling, the thickness of the anodized coating is preferably 0.5-10 times, more preferably 1-8 times, even more preferably 1-5 times the pore diameter.

In the case where an electrodeposition treatment is to be conducted later as the pore-filling treatment, the pore diameter is preferably 10 nm or larger.

Consequently, in one preferred embodiment, the anodized coating has a thickness of 0.1-1 $\mu$m and an average micropore diameter of 0.01-0.5 $\mu$m.

The average pore density is preferably 50-1,500 pores per $\mu$m$^2$.

The proportion of the area occupied by micropores is preferably 20-50%.

The proportion of the area occupied by micropores is the proportion of the total area of the micropore openings to the area of the aluminum surface. In calculating the proportion of the area occupied by micropores, the micropores include both micropores filled with a metal and unfilled micropores. Specifically, that proportion is determined by measuring the surface porosity before the pore-filling treatment.

In the case of using the method in which an anodization treatment is conducted using an electrolytic solution containing a treating agent, the anodization treatment can be conducted by the same method as described above, except that either of the hydrophilizing agent and hydrophobizing agent described below is incorporated as a treating agent in the electrolytic solution.

Examples of the hydrophilizing agent include hydrophilic fine inorganic particles and water-soluble resins.

Specific examples of the hydrophilic fine inorganic particles include colloidal silica (e.g., Snowtex ST-O, manufactured by Nissan Chemical Industries, Ltd., SiO$_2$ content 20% by mass, particle diameter 10-20 nm, pH 2.0-4.0) and colloidal alumina (e.g., Alumina Sol 500, manufactured by Nissan Chemical Industries, Ltd., Al$_2$O$_3$ content 20% by mass, NO$_3$ content 1% by mass or lower, boehmite platy crystal, nitric-acid-stabilized type; Alumina Sol 200, manufactured by Nissan Chemical Industries, Ltd. , Al$_2$O$_3$ content 10% by mass, CH$_3$COOH content 3.5% by mass or lower, feathery, acetic-acid-stabilized type; and Alumina Sol 100, manufactured by Nissan Chemical Industries, Ltd. , Al$_2$O$_3$ content 10% by mass, Cl content 3% by mass or lower, feathery, hydrochloric-acid-stabilized type).

Specific examples of the water-soluble resins include poly(vinyl alcohol) (PVA) and poly(acrylic acid) (PAA). Reagents of these resins manufactured by, e.g. , Kanto Chemical Co., Inc. are available.

From the standpoint of preventing gelation, the hydrophilizing agent, when liquid, preferably has a pH value which is neutral or does not considerably change the pH of the electrolytic solution. When solid, the hydrophilizing agent preferably has a pH value which does not considerably change the pH of the electrolytic solution.

Examples of the hydrophobizing agent include colloidal hydrophobic resins; neutral emulsion resins such as modified styrene/butadiene copolymers and medium-hardness styrene copolymer latexes (e.g., Nipol LX438C, manufactured by Nippon Zeon Co., Ltd., average particle diameter 150 nm, pH 7; Nipol LX430, manufactured by Nippon Zeon Co., Ltd., average particle diameter 150 nm, pH 7) ; and acid emulsion resins such as modified styrene/butadiene copolymer latexes (e.g., Nipol LX407AS, manufactured by Nippon Zeon Co., Ltd. , average part iclediameter 100-140 nm, pH 5-6) and acrylate latexes (e.g., Nipol LX816, manufactured by Nippon Zeon Co., Ltd.).

As the hydrophobizing agent can also be used the so-called water repellency agent. Examples of the water repellency agent include compounds represented by the following formula (1).

$$R^1\text{-}Si(R^2)_3 \qquad (1)$$

In formula (1), $R^1$ represents an alkyl group having 3 or more carbon atoms and optionally having 1 or more substituents . $R^1$ may be either linear, branched, or cyclic.

Examples of the linear alkyl group include propyl, butyl, pentyl, hexyl, heptyl, octyl, nonyl, and decyl. Examples of the branched alkyl group include isopropyl, isobutyl, isopentyl, isohexyl, isoheptyl, isooctyl, isononyl, and isodecyl. Examples of the cyclic alkyl group include cyclopropyl, cyclobutyl, cyclopentyl, cyclohexyl, cycloheptyl, cyclooctyl, cyclononyl, and cyclodecyl.

The alkyl group may have 1 or more substituents, and the substituents are not particularly limited. Examples of the substituents include halogen atoms, alkyl groups, allyl, aryl groups, and groups comprising a combination of two or more thereof.

Examples of the halogen atoms include fluorine, chlorine, bromine, and iodine atoms. Examples of the alkyl groups include methyl, ethyl, and the same alkyl groups enumerated above as examples of $R^1$.

Preferred of those substituents is a fluorine atom.

The larger the number of carbon atoms in $R^1$ in the compounds represented by formula (1), the higher the surface hydrophobicity which can be imparted by the compounds. In the case where $R^1$ has fluorine atoms as substituents, the larger the number of fluorine atoms, the higher the surface hydrophobicity which can be imparted by the compounds.

$R^{2'}$ s each independently represent a methoxy, ethoxy, or isocyanate group.

Examples of the compounds represented by formula (1) include alkyltrimethoxysilanes, alkyltriethoxysilanes, fluoroalkyltrimethoxysilanes, fluoroalkyltriethoxysilanes, alkyltriisocyanatosilanes, and fluoroalkyltriisocyanatosilanes.

Preferred of these are fluoroalkylsilanes (FAS) such as fluoroalkyltrimethoxysilanes and fluoroalkyltriethoxysilanes and fluoroalkyltriisocyanatosilanes, which are water repellency agents of the room-temperature-curable type.

In the case where a hydrophilizing agent or a hydrophobizing agent is incorporated in an electrolytic solution to be used for the anodization treatment, the content thereof is preferably 1-30% by mass, more preferably 5-20% by mass, based on the whole electrolytic solution. As long as the content of the hydrophilizing or hydrophobizing agent is within that range, the anodization treatment can be evenly conducted even at a high voltage without causing burning (the trouble in which an even current distribution is not obtained because of, e.g., partial breakage of an anodized coating formed and, as a result, the current focuses on the broken part and the anodization reaction hence comes not to proceed over the whole surface).

<Pore-Widening Treatment>

The pore-widening treatment is a treatment in which after the main anodization treatment, the aluminum member is immersed in an aqueous acid solution or aqueous alkali solution to thereby partly dissolve away the anodized coating and enlarge the diameter of the micropores.

In this treatment, the barrier coating present on the bottom of each micropore of the anodized coating is dissolved away. As a result, in the pore-filling treatment, a metal can be electrodeposited selectively in the micropores.

When an aqueous acid solution is, used in the pore-widening treatment, it is preferred to employ an aqueous solution of an inorganic acid such as sulfuric acid, phosphoric acid, nitric acid, or hydrochloric acid or of a mixture of two or more thereof. The concentration of the aqueous acid solution is preferably 1-10% by mass. The temperature of the aqueous acid solution is preferably 25-40°C.

When an aqueous alkali solution is used in the pore-widening treatment, it is preferred to employ an aqueous solution of at least one alkali selected from the group consisting of sodium hydroxide, potassium hydroxide, and lithium hydroxide. The concentration of the aqueous alkali solution is preferably 0.1-5% by mass. The temperature of the aqueous alkali solution is preferably 20-35°C.

Specifically, it is preferred to use, for example, a 50 g/L aqueous phosphoric acid solution of 40°C, a 0.5 g/L aqueous sodium hydroxide solution of 30°C, or a 0.5 g/L aqueous potassium hydroxide solution of 30°C.

The time period of immersion in an aqueous acid solution or aqueous alkali solution is preferably 8-60 minutes, more preferably 10-50 minutes, even more preferably 15-30 minutes.

<Surface Treatment>

In the case where the main anodization treatment is conducted using an electrolytic solution containing no treating agent, the surface of the anodized coating is subjected to a surface treatment selected between a hydrophilizing treatment and a hydrophobizing treatment to impart thereto a surface nature which is either hydrophilicity or hydrophobicity, after the main anodization treatment or after a pore-widening treatment is further conducted thereafter. Incidentally, even when the main anodization treatment has been conducted using an electrolytic solution containing a treating agent, it is possible to conduct the surface treatment thereafter.

Methods for the hydrophilizing treatment are not particularly limited. Examples thereof include the potassium fluorozirconate treatment described in U.S. Patent 2, 946, 638, the phosphomolybdate treatment described in U.S. Patent 3,201,247, the alkyl titanate treatment described in British Patent 1,108,559, the poly(acrylic acid) treatment described in German Patent 1,091,433, the poly(vinylphosphonic acid) treatment described in German Patent 1,134,093 and British Patent 1,230,447, the phosphonic acid treatment described in JP-B-44-6409, the phytic acid treatment described in U.S.' Patent 3,307,951, the treatment with an oleophilic organic compound and a salt of a divalent metal described in JP-A-58-16893 and JP-A-58-18291, the treatment in which a layer of a hydrophilic cellulose (e.g., carboxymethyl cellulose) containing a water-soluble metal salt (e.g., zinc acetate) is formed as described in U.S. Patent 3,860,426, and the treatment in which a sulfo-containing water-soluble polymer is applied as described in JP-A-59-101651.

Examples thereof further include treatments in which the following compounds are applied: the phosphoric acid salt described in JP-A-62-019494, the water-soluble epoxy compound described in JP-A-62-033692, the phosphoric-acid-modified starch described in JP-A-62-097892, the diamine compound described in JP-A-63-056498, the amino acid compound described in JP-A-63-130391, the organic phosphonic acid containing carboxy or hydroxy groups as described in JP-A-63-145092, the compound having an amino group and a phosphono group described in JP-A-63-165183, the specific carboxylic acid derivative described in JP-A-2-316290, the phosphoric acid ester described in JP-A-3-215095, the compound having one amino group and one phosphorus-containing oxoacid group described in JP-A-3-261592, the phosphoric acid ester described in JP-A-3-215095, the aliphatic or aromatic phosphonic acid, e.g., phenylphosphonic acid, described in JP-A-5-246171, the sulfur-atom-containing compound, such as thiosalicylic acid, described in JP-A-1-307745, and the compound having a phosphorus-containing oxoacid group described in JP-A-4-282637.

Other preferred examples of methods for the hydrophilizing treatment include a method in which the aluminum member is immersed in an aqueous solution of an alkali metal silicate, such as sodium silicate or potassium silicate, and a method in which a hydrophilic vinyl polymer or a hydrophilic compound is applied to conduct the treatment.

The hydrophilizing treatment with an aqueous solution of an alkali metal silicate such as sodium silicate or potassium silicate canbe conducted according to the methods and procedures described in U.S. Patents 2,714,066 and 3,181,461.

Examples of the alkali metal silicate include sodium silicate, potassium silicate, and lithium silicate. The aqueous alkali metal silicate solution may contain sodium hydroxide, potassium hydroxide, lithium hydroxide, or the like in an appropriate amount.

Furthermore, the aqueous alkali metal silicate solution may contain a salt of an alkaline earth metal or a salt of a metal in Group 4 (Group IVA). Examples of the alkaline earth metal salt include nitric acid salts such as calcium nitrate, strontium nitrate, magnesium nitrate, and barium nitrate; sulfates; hydrochlorides; phosphates; acetates; oxalates; and borates. Examples of the Group 4 (Group IVA) metal salt include titanium tetrachloride, titanium trichloride, potassium titanium fluoride, potassium titanium oxalate, titanium sulfate, titanium tetraiodide, zirconium chloride oxide, zirconium dioxide, zirconium oxychloride, and zirconium tetrachloride. These alkaline earth metal salts and Group 4 (Group IVA) metal salts may be used alone or in combination of two or more thereof.

The hydrophilizing treatment comprising forming a hydrophilic layer may be conducted according to the conditions and procedures described in JP-A-59-101651 and JP-A-60-149491.

Examples of the hydrophilic vinyl polymer for use in this method include poly(vinylsulfonic acid) s and copolymers of a sulfo-containing polymerizable vinyl compound, such as p-styrenesulfonic acid, and an ordinary polymerizable vinyl compound, such as an alkyl (meth)acrylate. Examples of the hydrophilic compound for use in this metal include compounds having at least one member selected from the group consisting of -NH$_2$, -COOH, and sulfo groups.

Examples of methods for the hydrophilizing treatment further include a method in which a liquid containing the hydrophilizing agent described above is applied to the surface of the anodized coating and dried.

Methods for the hydrophobizing treatment are not particularly limited. Examples thereof include a method in which a hydrophobic layer is formed using any of: carboxymethyl cellulose; dextrin; gum arabic; organic phosphonic acids such as amino-containing phosphoric acids, e.g., 2-aminoethylphosphonic acid, and optionally substituted phenylphosphonic acid, naphthylphosphonic acid, alkylphosphonic acids, glycerophosphonic acid, methylenediphosphonic acid, and ethylenediphosphonic acid; organic phosphoric acids such as optionally substituted phenylphosphoric acid, naphthylphosphoric acid, alkylphosphoric acids, and glycerophosphoric acid; organic phosphinic acids such as optionally substituted phenylphosphinic acid, naphthylphosphinic acid, alkylphosphinic acids, and glycerophosphinic acid; amino acids such as glycine and β-alanine; hydrochlorides of hydroxy-containing amines, such as triethanolamine hydrochloride; and the like. These compounds may be used alone or as a mixture of two or more thereof.

Also preferred as the hydrophobic layer is the layer described in JP-A-2000-105462 which comprises a polymeric compound comprising a constituent ingredient having an acid group and a constituent ingredient having an onium group.

Examples of methods for the hydrophobizing treatment further include a method in which a liquid containing the hydrophobizing agent described above is applied to the surface of the anodized coating and dried.

Coating techniques for use in the hydrophilizing treatment and hydrophobizing treatment are not particularly limited. Examples thereof include bar coater coating, spin coating, spray coating, curtain coating, dip coating, air-knife coating, blade coating, and roll coating.

<Pore-Filling Treatment with Metal Having Catalytic Activity>

As the metal having catalytic activity, any metal which, in the form of fine particles of either the metal or an oxide or sulfide thereof, has catalytic activity in organic-compound synthesis reactions can be used without particularlimitations. Examples thereof include gold, platinum, palladium, ruthenium, cobalt, nickel, copper, manganese, iron, vanadium, chromium, and silver, which show remarkable catalytic activity when used as, in particular, industrially useful catalysts for oxidation reactions, reduction reactions, etc. Preferred from the standpoint of the prolonged retention of catalytic activity (unsusceptibility to deterioration by repeated use in synthesis reaction) are gold, platinum, palladium, ruthenium, and silver.

Methods for the pore-filling treatment are not particularly limited and known methods can be used.

Examples thereof include the electrodeposition method and a method in which a dispersion of colloidal metal particles is applied to the aluminum member having an anodized coating and dried. The metal preferably is in the form of independent primary particles or aggregates.

The electrodeposition method can be conducted by known techniques. Examples thereof in the case of, e.g., the electrodeposition of gold include a method in which the aluminum member is immersed in a 30°C dispersion containing 1 g/L $HAuCl_4$ and 7 g/L $H_2SO_4$ and subjected to an electrodeposition treatment for 5-6 minutes at a constant voltage of 11 V (regulated with Slidax).

Examples of the electrodeposition method using copper, tin, and nickel are described in detail in Gendai Kagaku, January 1997 issue, pp. 51-54, and these methods may be used.

The dispersion for use in the method in which colloidal metal particles are used can be obtained by known methods. For example, the particles can be obtained by a process for fine-particle production by the low-vacuum vaporization method and a process for metal colloid production which comprises reducing an aqueous solution of a metal salt.

The colloidal metal particles have an average particle diameter of preferably 1-200 nm, more preferably 1-100 nm, even more preferably 2-80 nm.

The dispersion medium to be used in the dispersion preferably is water. Also usable is a mixed solvent composed of water and one or more of water-miscible solvents, e.g., alcohols such as ethyl alcohol, n-propyl alcohol, isopropyl alcohol, 1-butyl alcohol, 2-butyl alcohol, t-butyl alcohol, methyl Cellosolve, and butyl Cellosolve.

In the method using colloidal metal particles, methods for application are not particularly limited. Examples thereof include bar coater coating, spin coating, spray coating, curtain coating, dip coating, air-knife coating, blade coating, and roll coating.

The dispersion to be used in the method in which colloidal metal particles are used preferably is a dispersion of colloidal gold particles or a dispersion of colloidal silver particles.

As the dispersion of colloidal gold particles, use can be made, for example, of ones described in JP-A-2001-89140 and JP-A-11-80647. Commercial products also are usable.

The dispersion of colloidal silver particles preferably contains particles of an alloy of silver and palladium because these particles are not influenced by the acid released from the anodized coating. In this case, the content of palladium in the alloy is preferably 5-30% by mass.

After the application of the dispersion, the anodized coating is suitably washed with a solvent, e.g., water. Thus, only the particles packed in the micropores are left in the anodized coating, and the particles which have not been packed in the micropores are removed.

The amount of the metal deposited through the pore-filling treatment is preferably 100-500 mg/m$^2$.

The surface porosity of the anodized coating after the pore-filling treatment is preferably 20% or lower. The surface porosity after the pore-filling treatment is the proportion of the total area of the openings of unfilled micropores to the area of the aluminum surface. When the surface porosity is in that range, higher catalytic activity is obtained.

In the case where the pore diameter is 50 nm or larger, it is preferred to use the method in which colloidal metal particles are used. In the case where the pore diameter is smaller than 50 nm, it is preferred to use the electrodeposition method. A method comprising a combination of these two is also preferred.

<Microstructure Material>

In the metal particle type reaction catalyst (hereinafter referred to also as structure) of the invention thus obtained, the micropores are filled with the metal and this metal is present in particulate arrangement on the anodized coating.

Fig. 1 is a diagrammatic sectional view illustrating a surface of a structure of the invention which has undergone a pore-filling treatment by the electrodeposition method. The structure 10 shown in Fig. 1 has an anodized coating 12 having micropores 14, and the micropores 14 are filled with a metal 16. The surface of the metal 16 in each micropore is protrudent from the surface of the anodized coating 12 to form a particulate shape.

Fig. 2 is a diagrammatic sectional view illustrating a surface of a structure of the invention which has undergone a pore-filling treatment by the method using colloidal metal particles. The structure 20 shown in Fig. 2 has an anodized coating 22 having micropores 24, and the micropores 24 are filled with a metal 26. The surface of the metal 26 in each micropore is protrudent from the surface of the anodized coating 22 to form a particulate shape. There are cases where micropores 24 have residual spaces inside (this is conspicuous in the right-hand micropore in Fig. 2).

From the standpoint of heightening the effect of the structure as a synthesis reaction catalyst, shorter spacings between the metal particles are generally preferred. However, the optimal spacing is influenced by the size and shape of the metal particles.

Consequently, the spacing between the metal particles cannot be unconditionally determined. However, it is generally in the range of preferably 1-400 nm, more preferably 5-300 nm, even more preferably 10-200 nm. When the spacing is within that range, the effect of the structure as a synthesis reaction catalyst is heightened.

The term "spacing between metal particles" as used herein means the shortest distance between the surfaces of adjacent particles.

[Examples]

The invention will be explained below in more detail by reference to Examples, but the invention should not be construed as being limited to the following Examples.

(EXAMPLES 1 TO 18 AND COMPARATIVE EXAMPLES 1 TO 5)

1. Production of Structures

Substrates were subjected successively to a mirror finish treatment, formation of recesses, main anodization treatment, pore-widening treatment, surface treatment, and pore-filling treatment as shown in Tables 1 and 2 to obtain respective structures. In Tables 1 and 2, "-" indicates that the treatment was omitted.

Table 1

| Structure | Substrate | Self-ordering anodization treatment (formation of recesses) | Anodization treatment | Surface treatment | Pore-filling treatment |
|---|---|---|---|---|---|
| Example 1 | 1 | 1 | 1 | hydrophilizing treatment | 1 |
| Example 2 | 1 | 1 | 1 | hydrophobizing treatment 1 | 1 |
| Example 3 | 1 | 1 | 1 | hydrophobizing treatment 2 | 1 |
| Example 4 | 1 | 2 | 2 | hydrophilizing treatment | 2 |
| Example 5 | 1 | 2 | 2 | hydrophobizing treatment 1 | 2 |
| Example 6 | 1 | 2 | 2 | hydrophobizing treatment 2 | 2 |
| Example 7 | 1 | 1 | 3 | - | 1 |
| Example 8 | 1 | 2 | 4 | - | 2 |

(continued)

| Structure | Substrate | Self-ordering anodization treatment (formation of recesses) | Anodization treatment | Surface treatment | Pore-filling treatment |
|---|---|---|---|---|---|
| Example 9 | 1 | 1 | 5 | - | 1 |
| Example 10 | 1 | 2 | 6 | - | 2 |
| Example 11 | 1 | 1 | 7 | - | 1 |
| Example 12 | 1 | 2 | 8 | - | 2 |
| Comparative Example 1 | 1 | 1 | 1 | - | 1 |
| Comparative Example 2 | 1 | 2 | 2 | - | 2 |
| Comparative Example 3 | 1 | - | - | - | 1 |

Table 2

| Structure | Substrate | FIB method (formation of recesses) | | Anodization treatment | Pore-filling treatment |
|---|---|---|---|---|---|
| | | Density of recesses [recesses per $\mu m^2$] | Spacing between centers [nm] | | |
| Example 13 | 2 | 100 | 100 | 3 | 2 |
| Example 14 | 2 | 100 | 100 | 4 | 2 |
| Example 15 | 2 | 100 | 100 | 5 | 2 |
| Example 16 | 2 | 100 | 100 | 6 | 2 |
| Example 17 | 2 | 100 | 100 | 7 | 2 |
| Example 18 | 2 | 100 | 100 | 8 | 2 |
| Comparative Example 4 | 2 | 100 | 100 | 8 | - |
| Comparative Example 5 | 2 | - | - | - | 2 |

The substrates and the treatments are explained below.

(1) Substrates

The substrates used for producing the structures are as follows.
Substrate 1: high-purity aluminum; manufactured by Wako Pure Chemical Industries, Ltd.; purity, 99.99% by mass; thickness, 0.4 mm
Substrate 2: glass having a surface layer; manufactured by ASONE Corp.; thickness, 5 mm
The surface layer of substrate 2 was formed on the glass by sputtering under the following conditions : ultimate pressure, $4 \times 10^{-6}$ Pa; sputtering pressure, $10^{-2}$ Pa; argon flow rate, 20 sccm; substrate, regulated at 150°C (with cooling); no bias; sputtering power source, RC; sputtering power, RF 400 W; and sputtering target, 4N backing plate made of aluminum having a purity of 99.99% by mass (manufactured by Kyodo International, Inc.). The thickness of the surface layer was 0.5 $\mu$m.
The surface layer was regulated so as to have that thickness by regulating the sputtering time based on a calibration curve indicating correlation between time and film thickness obtained by applying a mask to a PET substrate, depositing a layer on this substrate by sputtering under the same conditions as described above for various sputtering times, and measuring the thicknesses of the deposits with an atomic force microscope (AFM) .

The purity of the surface layer was determined by conducting total quantitative analysis with a scanning X-ray photoelectron spectroscopic analyzer (Quantum 2000, manufactured by ULVAC-PHI, Inc.) while digging the layer in the depth direction with an ion gun for etching and determining the contents of impurity metal elements by the calibration curve method. As a result, the surface layer was found to have almost the same purity as the sputtering target.

(2) Mirror Finish Treatment

Of substrates 1 and 2, substrate 1 was subjected to the following mirror finish treatment.

<Mirror Finish Treatment>

A mirror finish treatment was performed by conducting polishing with abrasive cloths, buff polishing, and electrolytic polishing in this order. After the buff polishing, the substrate was washed with water.

In the polishing with abrasive cloths, a grinder (Struers Abramin, manufactured by Marumoto Kogyo K.K.) and waterproof abrasive cloths (commercial products) were used. The waterproof abrasive cloths used were #200, #500, #800, #1000, and #1500; these abrasive cloths were successively used in this order.

The buff polishing was conducted with slurry abrasive materials (FM No. 3 (average particle diameter, 1 $\mu$m) and FM No. 4 (average particle diameter, 0.3 $\mu$m), each manufactured by Fujimi Incorporated).

For the electrolytic polishing was used an electrolytic solution (temperature, 70°C) having the following composition. The electrolytic polishing was conducted for 2 minutes at a constant current of 130 mA/cm$^2$ using the substrate and a carbon electrode as the anode and the cathode, respectively. As a power source was used GP0110-30R (manufactured by Takasago, Ltd.).

<Composition of Electrolytic Solution>

· 85 mass% phosphoric acid (reagent manufactured by Wako Pure Chemical Ltd.)      660 mL
· Pure water      160 mL
· Sulfuric acid      150 mL
· Ethylene glycol      30 mL

(3) Formation of Recesses

The mirror-finished surface of substrate 1 and a surface of substrate 2, which had not undergone mirror finishing, were treated by either of the following methods (i) and (ii) to thereby form, in the surfaces, recesses serving as starting points for micropore formation in the main anodization treatment which will be described later.

(i) Focused Ion Beam Method (FIB Method)

A focused ion beam processing apparatus was used to irradiate the surface of substrate 2 with a focused ion beam and thereby form recesses. The ion species used was gallium. The accelerating voltage, ion beam diameter, and ion current were 30 kV, about 30 nm, and about 3 pA, respectively.

In this processing, the secondary-electron observation function of the focused ion beam processing apparatus was used for the positioning of recesses to repeatedly conduct the irradiation so as to result in a honeycomb pattern (closest-packing structure) having the recess density and recess center spacing shown in Table 2. The ion beam residence time for each recess was about 10 msec.

(ii) Self-Ordering Method

The surface of substrate 1 was subjected to a self-ordering anodization treatment using the kind, concentration, and temperature of electrolytic solution, voltage, current density, and treatment time shown in Table 3 to form an anodized coating having the thickness and average pore diameter shown in Table 3. In the self-ordering anodization treatment were used NeoCool BD36 (manufactured by Yamato Scientific Co., Ltd.), a pair stirrer PS-100 (manufactured by EYELA), and GP0650-2R (manufactured by Takasago, Ltd.) as a cooler, stirrer/heater, and power source, respectively.

Table 3

| Conditions | Kind of electrolytic solution | Concen tration [mol/L] | Temperature [°C] | Voltage [V] | Current density [mA/dm$^2$] | Time [hr] | Coating thickness [$\mu$m] | Average pore diameter [$\mu$m] |
|---|---|---|---|---|---|---|---|---|
| 1 | phosphoric acid | 1 | 7 | 80 | 400 | 8 | 40 | 100 |
| 2 | sulfuric acid | 0.3 | 16 | 25 | 100 | 7 | 70 | 20 |

The phosphoric acid and sulfuric acid shown in Table 3 were reagents manufactured by Kanto Chemical Co., Ltd. The current densities shown are values measured in a stable state.

The average pore diameter of micropores was determined through image analysis of an SEM photograph of the surface. The method of image analysis used is shown below.

An image processing software (Image Factory, manufactured by Asahi Hi-Tech Co., Ltd.) was used to conduct binarization (Otsu method). Thereafter, the shape analysis of the binarized image was performed by conducting black filling, black expansion, and black contraction in this order. Subsequently, the lengths displayed on the photograph were inputted with a measuring bar. Furthermore, a shape feature was extracted and the diameter of an equivalent circle was outputted. The average pore diameter was calculated from a distribution of the diameters of equivalent circles.

Subsequently, the substrate having the anodized coating was immersed in a treating liquid (temperature, 50°C) composed of 100 g of 85% by mass aqueous phosphoric acid solution (manufactured by Kanto Chemical Co., Inc.), 30 g of chromic anhydride (manufactured by Kanto Chemical Co., Inc.), and 1, 500 g of pure water. Thus, a coating removal treatment for dissolving the anodized coating was conducted.

The rate of coating removal was calculated from the change in film thickness of the anodized coating with time and the treatment time in the manner shown below. As a result, the rate was found to be 4 $\mu$m/hr. After the coating removal treatment, the anodized coating had a thickness of 0.1 $\mu$m or smaller.

<Calculation of Rate of Coating Removal>

During the coating removal treatment, the substrate was sampled at an interval of one hour. These samples were bent, and a section in a cracked part (section formed by breakage) was examined with an ultrahigh-resolution SEM (Hitachi S-900, manufactured by Hitachi, Ltd.) at a relatively low accelerating voltage of 12 V, without conducting any treatment for imparting electrical conductivity, such as a vapor deposition treatment. Thus, the coating film thickness was measured. In each sampling, ten portions were randomly extracted and the average of the coating thicknesses thereof was determined. The tolerance of film thicknesses was in the range of $\pm$10%.

(4) Main Anodization Treatment

The substrates in which recesses had been formed were subjected to a main anodization treatment. This main anodization treatment was performed by: immersing each substrate in an electrolytic solution (whose temperature is shown in Table 4) obtained by adding the treating agent shown in Table 4 to 1 mol/L aqueous phosphoric acid solution in the amount shown in Table 4; and conducting an electrolysis operation one or plural times at the voltage shown in Table 4.

When the electrolysis operation was conducted plural times, the first operation was terminated when the voltage reached a predetermined constant-voltage value of $V_0$, the second operation was terminated when the voltage reached a predetermined constant-voltage value of $0.9 \times V_0$ [V], and the third operation was terminated when the voltage reached a predetermined constant-voltage value of $0.8 \times V_0$ [V]. Namely, the plural electrolysis operations were repeatedly conducted so that the nth operation was terminated when the voltage reached a predetermined constant-voltage value of $\{1-0.1 \times (n\text{-}1)\} \times V_0$.

The treating agents used are as follows.

Hydrophilizing agent 1: colloidal silica Snowtex ST-O, manufactured by Nissan Chemical Industries, Ltd.; $SiO_2$ content, 20% by mass; particle diameter, 10-20 nm; pH, 2.0-4.0

Hydrophilizing agent 2: colloidal alumina Alumina Sol 200, manufactured by Nissan Chemical Industries, Ltd.; $Al_2O_3$ content, 10% by mass; $CH_3COOH$ content, $\leq$3.5% by mass; feathery; acetic-acid-stabilized type

Hydrophobizing agent: modified styrene/butadiene copolymer latex Nipol LX407AS, manufactured by Nippon Zeon Co., Ltd.; average particle diameter, 100-140 nm; pH 5-6

The thickness of each of the anodized coatings was measured in the same manner as described above. The increases in thickness are shown in Table 4.

Furthermore, at 24 hours or 1 month after the formation of the anodized coatings, a water droplet (diameter, 2 mm) was dropped onto each anodized coating placed in air. After 30 seconds, the angle between the substrate surface and the water droplet surface (contact angle of water droplet in air) was measured. For the measurement was used a contact angle meter (CA-S150, manufactured by Kyowa Interface Science Co., Ltd.). The measurement was made on different points in each sample, and the average thereof was determined.

The results obtained are shown in Table 4. In Table 4, ".extended wetting" means that the water droplet showed high wetting properties and extended until the measurement time and a contact angle measurement was unable to be made.

Table 4

| Conditions | Kind of treating agent | Amount added [mass%] | Temperature [°C] | Voltage [V] | Number of times | Increase in coating thickness [$\mu$m] | Contact angle after 24 hr [°] | Contact angle after 1 month [°] |
|---|---|---|---|---|---|---|---|---|
| 1 | none | - | 7 | 80 | 7 | 0.2 | 5 | 40 |
| 2 | none | - | 20 | 16 | 1 | 0.2 | 5 | 40 |
| 3 | hydrophilizing agent 1 | 5 | 7 | 80 | 7 | 0.2 | extended wetting | extended wetting |
| 4 | hydrophilizing agent 1 | 20 | 20 | 16 | 1 | 0.2 | extended wetting | extended wetting |
| 5 | hydrophilizing agent 2 | 5 | 7 | 80 | 7 | 0.2 | extended wetting | extended wetting |
| 6 | hydrophilizing agent 2 | 20 | 20 | 16 | 1 | 0.2 | extended wetting | extended wetting |
| 7 | hydrophobizing agent | 5 | 7 | 80 | 7 | 0.2 | 90 | 90 |
| 8 | hydrophobizing agent | 20 | 20 | 16 | 1 | 0.2 | 90 | 90 |

(5) Pore-Widening Treatment

A pore-widening treatment was conducted by immersing each substrate for 30 minutes in an aqueous phosphoric acid solution having a concentration of 50 g/L (solution temperature, 30°C).

(6) Surface Treatment

As a surface treatment, any of a hydrophilizing treatment, hydrophobizing treatment 1, and hydrophobizing treatment 2 was conducted.

The hydrophilizing treatment was conducted by immersing the surface of the anodized coating in a 2.5% by mass aqueous solution of #3 sodium silicate (solution temperature, 30°C) for 10 seconds.

Hydrophobizing treatment 1 was conducted by applying a treating liquid (temperature, 25°C) having the following composition in an amount of 2 mg/m$^2$ on a dry basis and drying the liquid applied.

<Treating Liquid Composition>

· β-Alanine (manufactured by Kanto Chemical)    0.2 g
· Methanol    100 g
· Water    1 g

Hydrophobizing treatment 2 was conducted by applying a methanol solution of $CF_3CF_2CH_2CH_2Si(OCH_2CH_3)_3$ (SIH5814. 2, manufactured by Chisso Corp.) in an amount of 2 mg/m$^2$ on a dry basis and drying the solution applied.

(7) Pore-Filling Treatment

As a pore-filling treatment, either of pore-filling treatment 1 and pore-filling treatment 2 was conducted.

<Pore-Filling Treatment 1 (method using colloidal gold particles)>

To 1.5 mL of 0.05% by mass aqueous $HAuCl_4$ solution was added 1.5 mL of 1% by mass aqueous citric acid solution. This mixture was gradually heated from room temperature with an alcohol lamp and the heating was stopped when the mixture changed to purplish red. This mixture was cooled to room temperature to obtain a colloidal gold particle dispersion (average particle diameter of the colloidal gold particles, 120 nm). The substrate was immersed in this dispersion for 1 minute, subsequently washed with water, and dried.

<Pore-Filling Treatment 2 (electrodeposition method)>

The substrate was immersed in a 30°C dispersion containing 1 g/L $HAuCl_4$ and 7 g/L $H_2SO_4$ and subjected to electrodeposition for 5 minutes and 30 seconds at a constant voltage of 11 V (regulated with Slidax).

The structures obtained above were used as reduction reaction catalysts for reducing nitrogen oxide NO$_x$ to N$_2$ with a hydrocarbon to examine the conversion to nitrogen. A microreactor was produced which comprised a stainless-steel channel of a mm size and each structure placed therein so that the surface of the structure was exposed in the channel. This microreactor was simultaneously used for comparison. Namely, a thin strip is cut out of the metal-particle structure and inserted into a stainless-steel pipe. This stainless-steel pipe is heated and a gas is introduced into this channel. As a result, the gas is adsorbed onto the metal-nanoparticle structure present in the channel and reacted. Thus, the channel itself functions as a reactor.

<Experimental Conditions>

Cylindrical heating reactors respectively having channel diameters of 100 mm, 20 mm, and 2 mm and having a structure according to the invention disposed therein were assembled. One end of each reactor was connected to a GC-MASS analyzer. The reactive gas shown below was introduced through the other end and passes through the reactor, and the compounds obtained were identified with the GC-MASS analyzer.

[Reactive Gas]

1,000 ppm NO + 1,000 ppm propylene + 5 vol% $O_2$ + 5.1 vol% $H_2O$

[Flow Rate: space velocity]

20,000 mL/h (per g of the catalyst)

[Heating Temperature]

350°C
The results obtained are shown in Table 5.

Table 5

| Synthesis reaction | structure | Channel diameter of reactor [mm] | Conversion to $N_2$ [%] |
|---|---|---|---|
| Example 1 | Example 1 | 2 | 49 |
| Example 2 | Example 2 | 2 | 50 |
| Example 3 | Example 7 | 100 | 30 |
| Example 4 | Example 7 | 20 | 33 |
| Example 5 | Example 7 | 2 | 54 |
| Example 6 | Example 13 | 2 | 51 |
| Comparative Example 1 | Comparative Example 1 | 2 | 0 |
| Comparative Example 2 | Comparative Example 2 | 2 | 0 |
| Comparative Example 3 | Comparative Example 3 | 100 | 15 |
| Comparative Example 4 | Comparative Example 3 | 2 | 21 |
| Comparative Example 5 | Comparative Example 4 | 2 | 0 |
| Comparative Example 6 | Comparative Example 5 | 2 | 10 |

As apparent from Tables 1 to 4, the metal particle type reaction catalysts of the invention have satisfactory long-term stability, have a regular particle diameter and orientation, and can be mass-produced.
It can be seen from Table 5 that the catalysts have high catalytic activity and that use of the catalysts inmicroreactors can efficiently improve conversion in a target reaction.
The metal particle type reaction catalyst of the invention can be mass-produced, shows high catalytic activity in oxidation reactions and reduction reactions, and retains its catalytic activity over long. When used in combination with a microreactor, the catalyst brings about a greatly improved conversion in reactions. Furthermore, the metal particle type reaction catalyst of the invention is applicable to various chemical plants, automotive mufflers, etc.

**Claims**

1. A metal particle type reaction catalyst comprising:

a metallic member having micropores; and
a metal having catalytic activity,

wherein the micropores are filled with the metal having catalytic activity.

2. The metal particle type reaction catalyst according to claim 1,
   wherein the metallic member having micropores is an aluminum having an anodized coating on a surface of the aluminum.

3. The metal particle type reaction catalyst according to claim 1 or 2,
   wherein the metal having catalytic activity is gold, platinum, palladium, ruthenium or silver.

4. The metal particle type reaction catalyst according to claim 2 or 3,
   wherein the anodized coating has a thickness of from 0.1 to 1 $\mu$m and an average micropore diameter of from 0.01 to 0.5 $\mu$m.

5. The metal particle type reaction catalyst according to any one of claims 2 to 4,
   wherein the anodized coating has an average pore density of from 50 to 1,500 pores per $\mu$m$^2$.

6. The metal particle type reaction catalyst according to any one of claims 2 to 5,
   wherein a proportion of an area occupied by the micropores to an area or the surface of the aluminum is from 20 to 50%.

7. A process for producing a metal particle type reaction catalyst, the process comprising:

   subjecting a surface of a metallic member to an anodized treatment so as to form an anodized coating having micropores;
   subjecting a surface of the anodizedcoati ng to one surface treatment of a hvdrophilizing treatment and a hydrophobizing treatment to impart a surface nature; and
   filling the micropores with a metal having catalytic activity.

8. A catalytic-reaction apparatus comprising:

   a microreader; and
   a metal particle type reaction catalyst according to any one of claims 1 to 6 disposed in the microreactor.

## FIG. 1

## FIG. 2

## FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2000031462 A
- JP 2003268592 A
- US 2708655 A
- JP 10121292 A
- JP 2001105400 A
- JP 2003129288 A
- JP 2000315785 A
- US 2946638 A
- US 3201247 A
- GB 1108559 A
- DE 1091433
- DE 1134093
- GB 1230447 A
- JP 446409 B
- US 3307951 A
- JP 58016893 A
- JP 58018291 A
- US 3860426 A
- JP 59101651 A

- JP 62019494 A
- JP 62033692 A
- JP 62097892 A
- JP 63056498 A
- JP 63130391 A
- JP 63145092 A
- JP 63165183 A
- JP 2316290 A
- JP 3215095 A
- JP 3261592 A
- JP 5246171 A
- JP 1307745 A
- JP 4282637 A
- US 2714066 A
- US 3181461 A
- JP 60149491 A
- JP 2000105462 A
- JP 2001089140 A
- JP 11080647 A

### Non-patent literature cited in the description

- **H. MASUDA et al.** *Jpn. J. Appl. Phys.,* 1998, vol. 37, L1340-1342
- The Surface Finishing Society of Japan. Hyômen Gijutsu Binran. Nikkan Kogyo Shinbun Ltd, 1998, 490-553
- **HIDEKI MASUDA.** Highly Regular Metal Nanohole Array Based on Anodized Alumina. *Kotai Butsuri,* 1996, vol. 31 (5), 493-499
- **MASATAKE HARUTA.** New Catalytic Function of Ultrafine Gold Particles. *Gendai Kagaku,* May 1998, 42-49
- Aluminum Handbook. Japan Aluminum Association, 2001, 164-165
- Aluminum Handbook. 2001, 164-165

- *Jitsumu Hyômen Gijutsu,* 1986, vol. 33 (3), 32-38
- *J. Electrochem. Soc.,* 05 May 1997, vol. 144, L128
- *Jpn, J. Appl. Phys.,* 1996, vol. 35 (1B), L126
- *Appl. Phys. Lett.,* 10 November 1997, vol. 71 (19), 2771
- **H. MASUDA et al.** *Jpn. J. Appl. Phys.,* 01 November 1998, vol. 37 (11A), L1340-1342
- *Appl. Phys. Lett,* 10 November 1997, vol. 71 (19), 2771
- *Gendai Kagaku,* January 1997, 51-54